# EUROPEAN PATENT SPECIFICATION

(11) **EP 1 978 846 B1**
(45) Date of publication and mention of the grant of the patent: **09.03.2011**
(21) Application number: 07763125.7
(22) Date of filing: 24.01.2007
(51) Int. Cl.: A47C 17/00

(54) **COVERINGS FOR VISCOELASTIC FOAM MATTRESSES**
ÜBERZÜGE FÜR VISKOELASTISCHE SCHAUMSTOFFMATRATZEN
HOUSSES DESTINEES A DES MATELAS EN MOUSSE VISCOELASTIQUE

(30) Priority: 02.02.2006 US 764612 P
(43) Date of publication of application: 15.10.2008
(73) Proprietor: MMI-IPCO, LLC, Lawrence, MA 01842 (US)
(72) Inventor: ROCK, Moshe, Brookline, Massachusetts 02446 (US); HARYSLAK, Charles, Marlborough, Massachusetts 01752 (US); LUMB, Douglas, Atkinson, New Hampshire 03811 (US)
(74) Representative: Murray, Elisabeth Anne
(86) International application number: PCT/US2007/060974
(87) International publication number: WO 2007/092678

(56) References cited:
- EP-A- 0 617 152
- EP-A- 1 052 319
- WO-A-02/054896
- US-A- 4 786 549
- US-A- 4 847 133
- US-A- 5 413 837
- US-A1- 2004 097 151
- US-B2- 6 701 558
- US-B2- 6 927 182

## Description

### TECHNICAL FIELD

This disclosure relates to viscoelastic foam mattresses and fabric coverings for such mattresses.

### BACKGROUND

A trend in the mattress market is the use of viscoelastic foams, also referred to as "memory foams" or foams having compressible memory to form a sleeper-supporting surface. Viscoelastic foam conforms to the shape of an object resting upon its surface, and regains its generally flat surface once the object is removed. These foams, described, for example, in U.S. Patent No. 6,734,220, are generally formed of cured polyurethane-based viscoelastic polymer. Viscoelastic mattresses are often covered with a fabric cover, typically made of a fabric referred to as "ticking."

W002/054896 describes a fabric comprising a porous layer that is porous along the direction of the layer. The porous layer is bounded by upper and lower sides.

### SUMMARY

The present invention is defined by the appended claim 7. Covers for mattresses having a reclining surface of viscoelastic foam, are described herein.

In a preferred embodiment of the invention, the first pile surface defines one or more regions with relatively high pile disposed among one or more regions of relatively low pile or no pile, with the one or more regions of relatively low pile or no pile defining the one or more air flow regions for enhanced circulation of air between the reclining surface of viscoelastic foam and an opposed skin surface of the person reclining upon the cover. Some of the preferred embodiments include one or more of the following features. The one or more regions with relatively high pile and the one or more regions of relatively low pile or no pile are arranged upon at least one of the first pile surface and the second pile surface by engineered body mapping techniques in a manner to position the one or more air flow regions for enhanced circulation of air between the reclining surface of viscoelastic foam and an opposed skin surface of the person reclining upon the cover in accordance with requirements of corresponding body regions of the person reclining upon the cover. The one or more regions with relatively high pile and the one or more regions of relatively low pile or no pile are arranged upon at least one of the first pile surface and the second pile surface by standard knitting design techniques in a manner to position the one or more air flow regions for enhanced circulation of air generally between the reclining surface of viscoelastic foam and an opposed skin surface of the person reclining upon the cover in a regular pattern. Contrasting height among regions of relatively high pile and regions of relatively low pile or no pile is established by contrasting height of sinker loops. The sinker loops are in unnapped yarn form; in napped, velour form; or in cut loop form without pre-napping. The fabric body comprises a fabric laminate. The fabric body comprises stretch stitch yarns, e.g., stitch yarns with spandex. The fabric body comprises hydrophilic fibers. The fabric body comprises fibers of synthetic material, e.g., selected from the group consisting of polyester, acrylic, nylon, these fibers rendered hydrophilic, and blends thereof. The fabric body comprises material selected from the group consisting of cotton and wool. The fabric body has chemical treatment for one or more properties selected from the group consisting of wicking enhancement, stain release, water repellency, stain repellency, antimicrobial properties, and oil repellency. In some implementations, the fabric body comprises a double bar raschel warp knit construction.

In some implementations, the one or more regions of relatively high pile comprises a plurality of spaced-apart pile pillars and the one or more regions of relatively low pile or no pile comprises intersecting channels extending among the pile pillars and defining the one or more air flow regions for enhanced circulation of air between the reclining surface of viscoelastic foam and an opposed skin surface of the person reclining upon the cover. In some of these implementations, the fabric body comprises a knit structure with about 16 to about 28 wales per inch and about 14 to about 36 courses per inch. The fabric body has fineness in a range of about 40 to about 600 denier, with individual fibers having fineness in a range of about 1 dpf to about 12 dpf.

A described cover comprises a fabric body defining (a) a first surface disposed in engagement with the reclining surface; (b) an opposite, second surface disposed for engagement by a person reclining upon the cover; and (c) at least one air flow region for enhanced circulation of air between the reclining surface of viscoelastic foam and an opposed skin surface of the person reclining upon the cover.

In some implementations, the fabric body comprises a first fabric layer defining the first surface and a second fabric layer defining the opposite, second surface, with the one or more air flow regions defined therebetween; and the fabric body further comprises a plurality of intermediate members extending generally between the first fabric layer and the second fabric layer and through the one or more air flow regions for enhanced circulation of air between the reclining surface of viscoelastic foam and an opposed skin surface of the person reclining upon the cover. Some of these implementations include one or more of the following features. The plurality of intermediate members are disposed to resiliently urge apart the first fabric layer and the second fabric layer. The first fabric layer is permeable to water vapor and impermeable to liquid water. Each of the first fabric layer and the second fabric layer comprises stitch yarn. The stitch yarn of the first fabric layer has fineness in a range of about 50 to about 600 denier. The stitch yarn of the first fabric layer has individual fiber fineness in the range of about 0.3 to about 6.0 dpf. The stitch yarn of the first fabric layer comprises hydrophilic fibers. The stitch yarn of the first fabric layer comprises a synthetic material, e.g., selected from the group consisting of polyester, acrylic, nylon, these fibers rendered hydrophilic, and blends thereof. The stitch yarn of the second fabric layer comprises natural fibers. The stitch yarn of the second fabric layer comprises material selected from the group consisting of cotton and wool. The second fabric layer further comprises lay-in yarn held by the stitch yarn, e.g., an elastomeric yarn. The lay-in yarn comprises total fineness in a range of about 70 to about 300 denier.

The disclosure also features methods for forming a cover for a mattress having a reclining surface of viscoelastic foam.

For example, one described method includes (a) forming a circular knit fabric having four way stretch, with a first pile surface and an opposite, second pile surface and defining at least one air flow region for enhanced circulation of air between the reclining surface of viscoelastic foam and an opposed skin surface of the person reclining upon the cover, and (b) forming the circular knit fabric into a cover for a mattress having a reclining surface of viscoelastic foam.

Covers are described for a mattress having a reclining surface of viscoelastic foam, the cover formed by the above methods.

The term "pile," as used herein, includes pile surfaces formed by any desired method, including but not limited to cut loops, loops cut on the knitting machine, loops cut off the knitting machine, and raised fibers.

Some implementations exhibit one or more of the following advantages. The fabric cover conforms generally to the surface of the viscoelastic foam mattress as the foam changes in configuration from its original flat form to a conforming, compressed state and back to the original flat form. The cover provides minimum restriction to movement of the foam, so there is less tendency for the foam to bulge and/or crease. The fabric cover is comfortable to the user. Preferred mattress covers define one or more regions of air circulation between the viscoelastic foam surface of the mattress and the opposed skin surface of a person sleeping on the mattress, so that even as the viscoelastic foam conforms closely to the shape of the person sleeping on the mattress, the cover permits circulation of air between the surface of the mattress and the person's skin, to allow the person to sleep comfortably, including during warmer conditions.

The details of one or more implementations are set forth in the accompanying drawings and the description below. Other features and advantages will be apparent from the description and drawings, and from the claims.

### DESCRIPTION OF DRAWINGS

FIG 1 is a side view of a mattress cover on a mattress having a viscoelastic foam surface layer, with a sleeping person reclining upon the mattress surface.
FIG. 2 is a perspective view of a mattress cover according to one implementation, in which a raised upper surface and/or a raised lower surface of the cover defines one or more air flow regions for enhanced circulation of air between a sleeping person and the viscoelastic surface of the mattress. FIG 2A is a highly enlarged partial perspective view of area A-A in Fig. 2.
FIG 3 is a sectional view of a mattress cover according to another implementation, in which a raised upper surface and/or a raised lower surface has one or more regions of relatively high pile among one or more regions of relatively low or no pile, the regions of relatively low or no pile defining one or more air flow regions for enhanced circulation of air between a sleeping person and the viscoelastic surface of the mattress. In this implementation, the regions are arranged according to engineered body mapping techniques to accommodate corresponding body regions of a sleeping person.
FIG. 4 is a perspective view of a mattress cover according to another implementation, similar to the implementation of FIG. 3, in which a raised upper surface and/or a raised lower surface has one or more regions of relatively high pile among regions of relatively low or no pile, the regions of relatively low or no pile defining air flow regions for enhanced circulation of air between a sleeping person and the viscoelastic surface of the mattress, the regions in this implementation being evenly spread in an overall pattern according to standard knitting design techniques.
FIG 5 is a sectional view of a mattress cover according to another implementation, in which pile pillars extending from upper and/or lower surfaces of the cover define air flow regions for enhanced circulation of air between a sleeping person and the viscoelastic surface of the mattress.
FIG 6 is a sectional view of a mattress cover in which intermediate members span air flow regions defined between the upper surface and the lower surface of the mattress cover for enhanced circulation of air between a sleeping person and the viscoelastic surface of the mattress.
FIG. 7 is a perspective view of a mattress cover in which the smooth, technical face surface of two fabric layers are adhered together face-to-face to form a two-layer laminate, with their respective outer, technical back surfaces facing outward.
FIG. 8 is a perspective view of the mattress cover of FIG 3.
FIG. 9 is a perspective view of the mattress cover of FIG 5.
FIG. 10 is a perspective view of the mattress cover of FIG. 6.
FIG 11 is a side elevational view showing loop structure of a two-layer, three dimensional fabric suitable for use in the mattress cover shown in FIGS. 6 and 10.
FIG 12 is a side elevational view showing a larger area of the fabric of FIG. 11.

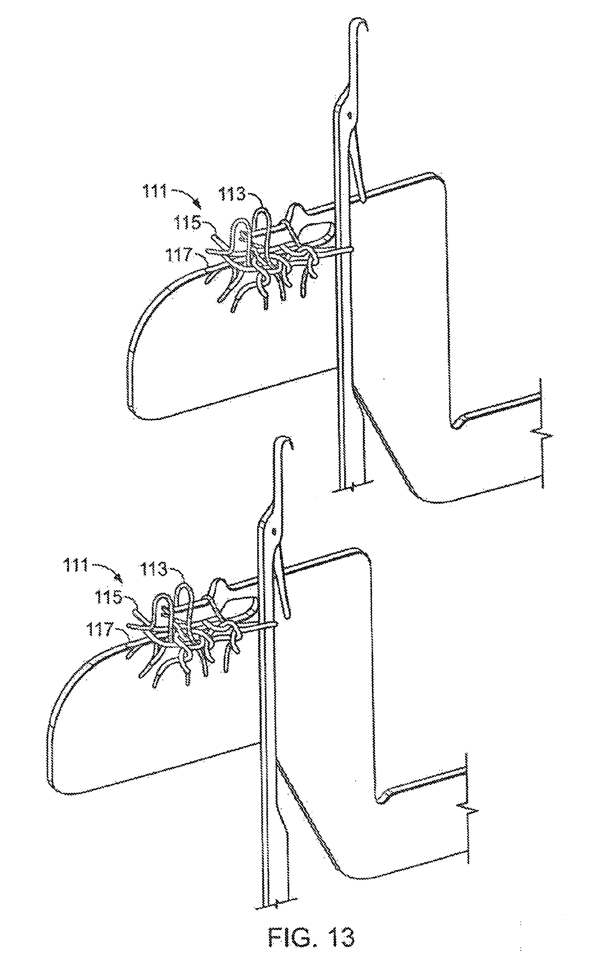

FIG. 13 is a perspective view of the fabric of FIG. 12 viewed from its technical back and illustrating formation of sinker loops.
FIG. 14 is a front elevational view of the fabric of FIG 12 viewed from its technical face.
FIG 15 is a side view showing terry loops of the fabric construction of FIG. 12 prior to (a) napping on the technical face and (b) shearing on the technical back.
FIG. 16 is a side view of terry loops on the technical face of the fabric construction of FIG 15 after napping.
FIG 17 is a side view of terry loops on the technical back of the fabric construction of FIG. 16 after shearing.

Like reference symbols in the various drawings indicate like elements.

### DETAILED DESCRIPTION

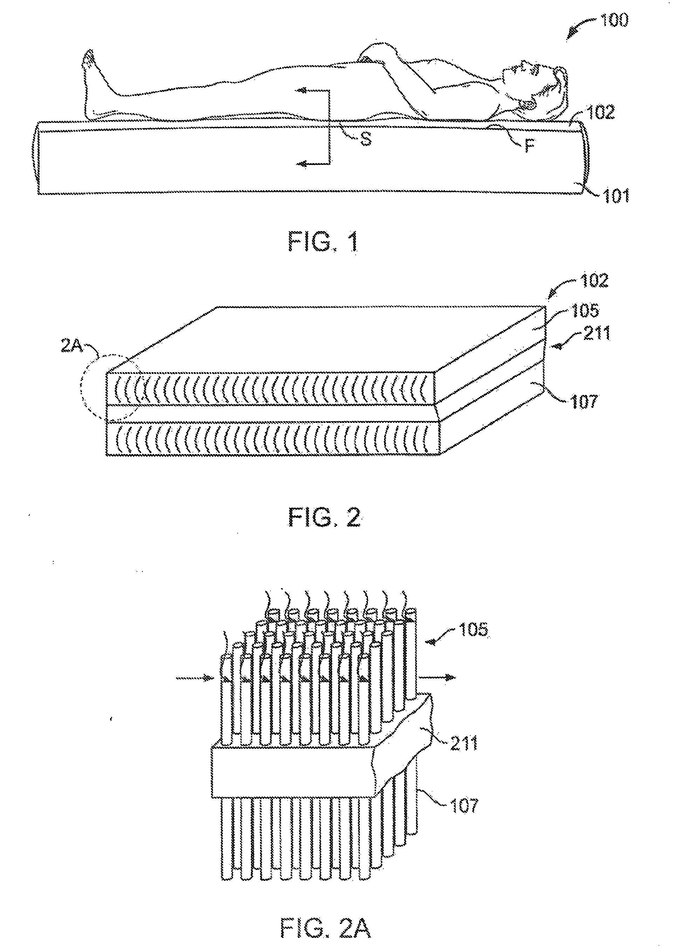

A mattress 100 having a viscoelastic foam surface layer 101 with a cover 102 is shown diagrammatically in FIG. 1. The mattress cover 102 is formed of a knitted fabric having at least two-way stretch with good recovery, e.g., a circular knit or warp knit fabric. The fabric typically includes spandex yarn, to allow the knitted fabric to conform to deformation of the compressed viscoelastic foam in multiple directions under load, and to avoid restricting recovery of the viscoelastic foam when the load is removed or reduced. Preferably the fabric has four-way balanced stretch, i.e., the elongation when the fabric is subjected to a load is substantially the same along the length and width of the fabric. The mattress cover is constructed to define one or more air flow regions for enhanced circulation of air between the reclining surface of viscoelastic foam and skin surfaces of a person reclining upon the cover. The regions for enhanced circulation of air may be provided in various forms.

Referring to FIG 2, in one implementation the fabric 211 forming mattress cover 102 includes raised surfaces 105, 107 on its technical face and technical back. As indicated by the arrow in FIG. 2A, these raised surfaces, formed of pile or loops, allow air flow between the pile fibers or loops. Thus, the raised surfaces provide enhanced circulation of air. Preferably, the fabric 211 is a circular knit fabric having four way stretch.

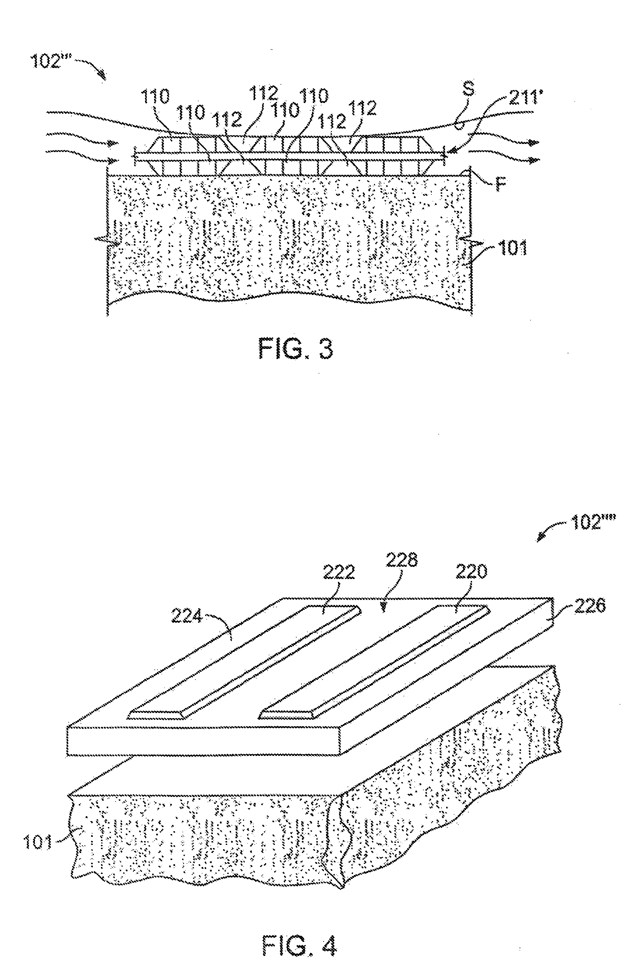

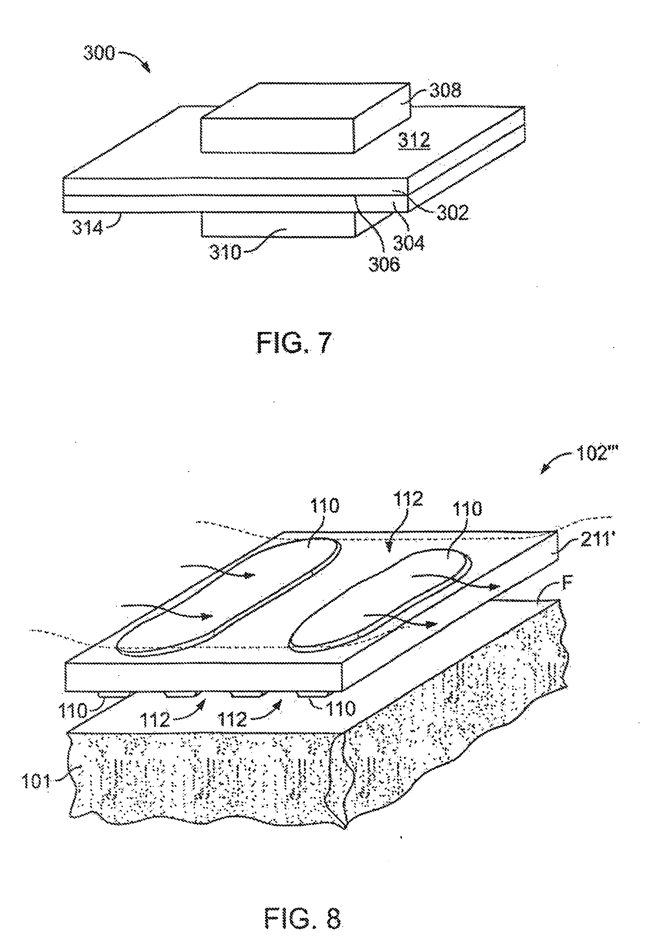

In another implementation, for example, as shown in FIGS. 3 and 8, the fabric 211' forming mattress cover 102"' has a raised surface with a three-dimensional geometry in which one or both surfaces define a predetermined pattern of regions of no loops or low loops or pile and regions of relatively higher loops or pile. The regions of relatively higher pile 110 are positioned and constructed to support the person reclining upon the cover and spaced from the reclining surface of viscoelastic foam, with regions of low pile and no pile 112 defining air flow regions for enhanced circulation of air through the air flow regions, between the reclining surface, F, of viscoelastic foam and the skin surface, S, of the person reclining upon the cover 102"'. In some cases, the fabric 211' is an engineered thermal fabric with regions of contrasting cushioning and air-flow capacity and performance, arranged by body mapping concepts, tailored to the different requirements of different regions of the sleeper's body. Greater cushioning will be provided by the regions 110 of relatively higher loops, reducing pressure on regions of the body that tend to compress the mattress more, e.g., hips and shoulders. Moreover, air ventilation will occur in the no loop or low loop regions 112 disposed among the regions 110 of relatively higher loops, thereby increasing the comfort level by reducing perspiration and heat buildup. Thus, such fabrics 211' will tend to optimize the comfort level of the person while sleeping. The distribution of the low and high pile areas can be selected to suit particular conditions and user preferences, and different products can be provided having different distributions.

The high and low pile areas may be distributed in a regular pattern, for example in bands, to simplify manufacture. For example, as shown in FIG 4, a lower band region 220 having relatively higher pile height and/or relatively higher fiber density may be positioned to extend generally across the person's hips and an upper band region 222, also of relatively higher pile height and/or relatively higher fiber density, may be positioned to extend generally across the person's shoulders. At the upper and lower extremities, respectively, of the mattress cover, a top region 224 of relatively low pile or no pile is positioned to extend generally beneath the person's head and along the side wall at the head of the mattress and a bottom band region 226 of relatively low pile or no pile is positioned to extend along the side wall at the foot of the mattress. An intermediate region 228, also of relatively low pile or no pile, is positioned to extend generally across the person's upper torso.

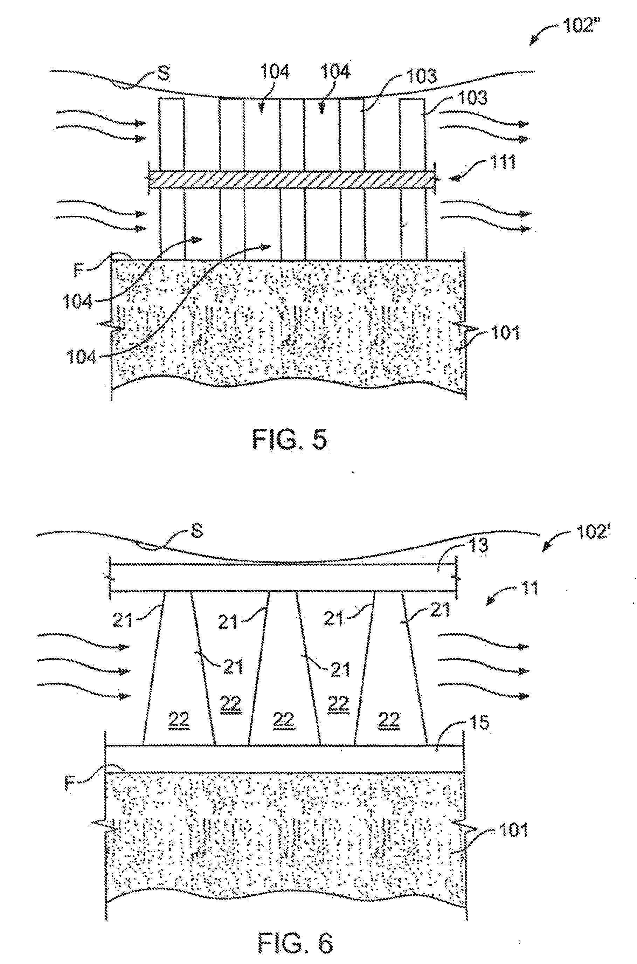

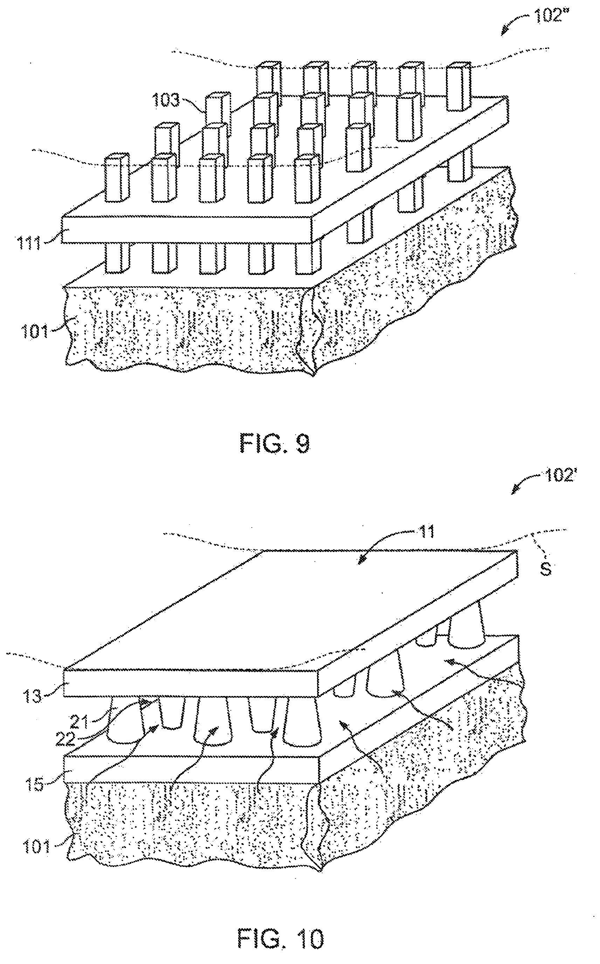

In another implementation, for example, as shown in FIGS. 5 and 9, a fabric 111 forming a mattress cover 102" has a raised surface on the technical back and a velour or terry sinker loop surface on the technical face. The raised surface on the technical back, disposed to face the viscoelastic foam surface layer 101, defines gaps or channels 104 allowing movement of air along the surface of the fabric, e.g., between the surface, F, of the mattress and the skin surface of the person reclining on the mattress. The velour or terry loop on the technical face of the fabric disposed to face the skin, S, of the reclining person, similarly defines gaps or channels to allow air circulation between the skin surface of the person's body and the viscoelastic surface of the mattress. The surface of raised pile fabric 111 defines spaced-apart pile pillars 103 among intersecting channels 104 defined therebetween. The pile pillars may be found at one surface of the fabric, or at both surfaces (technical face and technical back) of the fabric, e.g., as shown in FIGS. 5 and 9. The pile pillars define air flow regions, allowing enhanced circulation of air between the reclining surface, F, of the viscoelastic foam and the skin surface, S, of a person reclining upon the cover 102". The channels will also enhance moisture evaporation. The channels 104 may have any desired configuration; for example the channels may be in discrete regions of the fabric which may be interconnected or not interconnected, or may be continuous from one edge of the fabric to the opposite edge.

In another implementation, shown in FIGS. 6 and 10, a fabric body 11 forming a mattress cover 102' has the form of a two-layer, spacer fabric having an air circulation space defined between layers. For example, the fabric 11 may be a three-dimensional double knit fabric consisting of a first layer 13 and a second layer 15 that are spaced apart resiliently by interconnecting yarns 21. Such fabrics will be discussed in detail below. The resilient interconnecting yarns 21 urge the first layer 13 and second layer 15 apart, including under the weight of the reclining person, to permit air flow passageways 22 between the two layers, and thus between the surface, F, of the viscoelastic foam mattress and the surface, S, of a reclining person's skin. Air circulating through these air flow passageways 22 assists in cooling, and in removal of perspiration or other moisture, by evaporation.

In the implementations shown in FIGS. 2, 3 and 5, the fabric may be a two-layer laminate, with the smooth, technical face surface of the respective fabric layers being adhered together face-to-face and the respective outer, technical back surfaces (carrying the raised surfaces of FIG 2, the regions of high pile and low pile of FIG. 3, or the pile pillars of FIG 5) facing outward at both surfaces. For example, referring to FIG 7, laminate 300 includes two fabrics 302, 304, the smooth surfaces of which are adhered together at an interface 306. Each fabric carries a raised pile area 308, 310 on its technical back surface 312, 314.

The fabrics discussed above with reference to FIGS. 3-6 will now be discussed in further detail.

### Fabrics Having a Pattern of High and Low/No Pile Regions

In the engineered knit fabrics 211' discussed above with reference to FIGS. 3 and 8, the various regions can have pile of predetermined fiber density and predetermined pile height. The contrast of cushioning and airflow may be achieved, for example, by forming regions of different pile heights (e.g., using different sinker heights), different pile densities (e.g., using full face velour and velour with pattern of pile and no pile), and/or different types of yarns (e.g., using flat yarns with low shrinkage and texture yarns with high shrinkage). Regions of selected shape and size can be arranged in predetermined desired pattern, tailored, as discussed above, for use by persons of different ages and different genders, etc. and for other factors, such as seasonality, etc.

The surfaces of regions of relatively high pile height may be, for example, plain velour. Typically, the yarn and the pile density is maintained constant for all regions, again for simplicity of manufacture. The three dimensional pattern may exist on one or both sides of the fabric. For example, if the fabric is formed by a reverse plaiting process, the three dimensional pattern will exist on both sides of the fabric, typically, in register.

The engineered thermal fabric articles can be produced by any procedure suitable for creating regions of contrasting pile heights and/or regions with no pile, in predetermined designs. Examples of suitable procedures include electronic needle and/or sinker selection; tubular circular or terry loop knit construction, e.g. by reverse plaiting, to form double face fleece or to form pseudo single face fabric, or by regular plaiting, to form single face fleece; warp knit construction; woven construction; and fully fashion knit construction.

To simplify manufacturing, in some implementations, e.g., as shown in FIG. 4 and discussed above, the regions of contrasting performance are arranged in band form, extending across the mattress cover.

Any suitable yarn or fibers may be employed in forming the engineered thermal fabrics. Examples of suitable yarn or fibers include synthetic yarn or fibers formed, e.g., of polyester, nylon or acrylic; natural yarn or fibers formed, e.g., of cotton or wool; regenerate yarn or fibers, such as rayon; and specialty yarn or fibers, such as aramid yarn or fibers, as sold by E.I. duPont de Nemours and Company, Inc. under the trademarks NOMEX^{®} and KEVLAR^{®}.

### Fabrics Having Pile Pillars

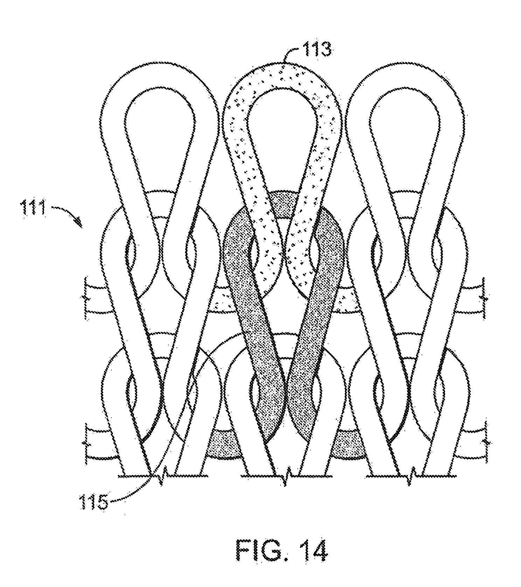

Referring to FIGS. 5 and 14, the raised surface fabric 111 discussed above includes a plurality of courses of loop yarn 113 integrated with stitch or backing yarn 115. The manner in which pile pillars are formed in this fabric will be discussed in detail below.

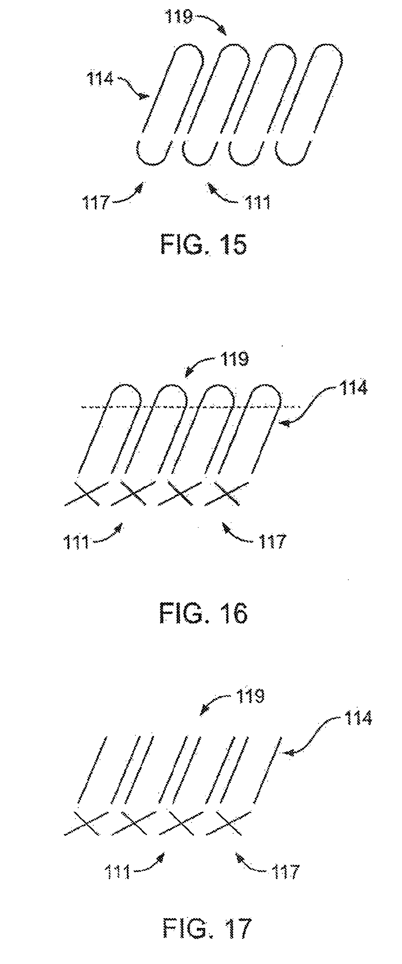

First, loop yarn 113 is plaited around stitch yarn 115 in order to define a plurality of fabric loops 114 (FIG 15). Fabric 111 has a circular knit reverse plaited construction suitable for generating a two-face-surface fabric, as described below.

Once fabric 111 is formed, technical face 117 is napped or otherwise raised (FIG 16). The napping process is carried out in a manner to maintain full loop coverage with minimal distortion of technical back 119. In particular, during the napping process, the integrity of loop yarn 113 on technical back 119 may, to some extent, be compromised, as it is pulled shorter, due to the napping process. Accordingly, loop yarn 113 generally must be knit longer, e.g. utilizing sinker loops of at least 2.0 mm or greater, in order to be able to shear loops 114 along technical back 119 at the conclusion of the napping process.

Once the napping or raising process is completed, loops 114 along technical back 119 are sheared, as shown in FIG. 17. Generally, the shearing step takes place after the napping step. If shearing takes place as the first fabric finishing step, as is usual for standard single face cut loop fabrics, the cut loops 114 can be pulled through the back to the face during any subsequent napping process.

The channels between pile pillars may be formed using, for example, the techniques described in U.S. Patent No. 6,927,182. In such techniques, vertical channels are constructed with the use of tipped and tipless sinkers, high and low sinkers, or some combination of both (e.g., 4 tipped sinkers, 2 tipless, 3 tipped sinkers, 2 tipless, repeat; 3 high sinkers, 1 low sinker, 2 high sinkers, 2 low sinkers, repeat; etc.). Horizontal channels may be created by removing the loop yarn from one or more feeds in some arrangement, or with the use of a shrinkable loop yarn which creates a channel after processing with wet (e.g., hot water, steam) or dry (air) heat (e.g., 4 loop in, 2 loop out, 3 loop in, 2 loop out, repeat; 3 low shrinkage loop, 3 high shrinkage loop, 3 low shrinkage loop, 3 high shrinkage loop, repeat; etc.).

Loop yarn 113 generally has bulk greater than that of the stitch yarn 115. For example, loop yarn 113 may have a denier of between about 70 and 600, while stitch yarn 115 has a denier of between about 30 and 150. Loop yarn 113 is preferably formed of 100% polyester or nylon. Loop yarn 113 may also be formed of other materials such as acrylic. Stitch yarn 115 may be formed, e.g., of polyester or nylon.

The fabric 111 may be knit on a standard terry sinker loop knitting machine or on a jacquard machine, the latter enabling the production of different height fabric loops along the technical back of the fabric.

### Two-Layer Fabrics

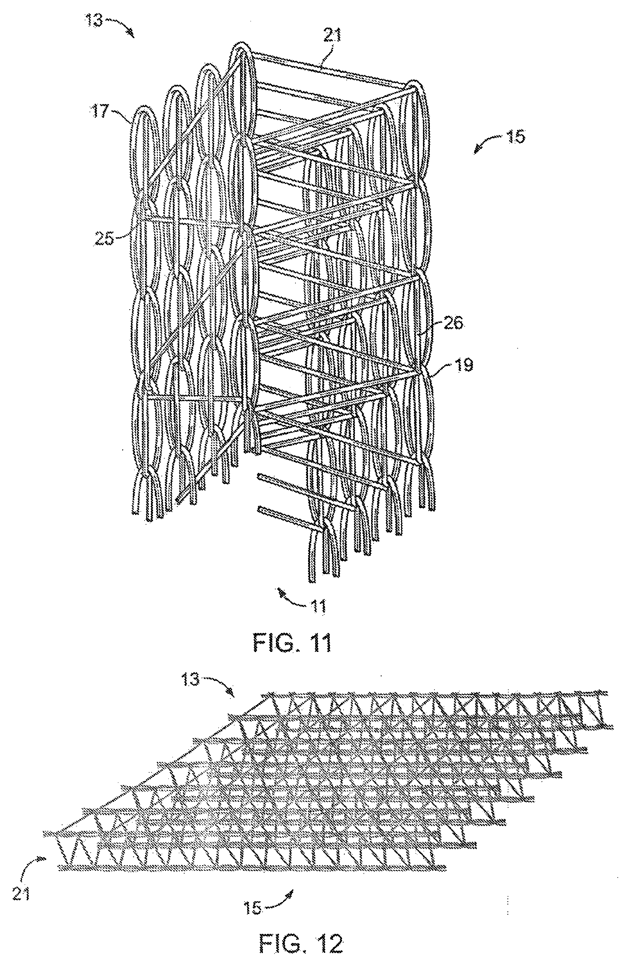

The two-layer fabrics 11 described above with reference to FIGS. 6 and 10 may be prepared by knitting a three-dimensional knit fabric on a double-needle bar warp knitting machine or circular knitting machine, both of which are well known in the art. As shown in FIGS. 11 and 12, the three-dimensional knit spacer fabric is generally indicated at 11 and includes a first fabric layer 13 formed of stitch yarn 17, a second fabric layer 15 formed of stitch yarn 19, and pile yarn 21 interconnecting the two layers. In addition, knit fabric 11 includes backing or lay-in yarns 25 and 26 (FIG 11), held by stitch yarns 17 and 19 respectively.

Pile yarns 21 have sufficient resilience and stiffness to space the two fabric layers apart, e.g., including when pressure is applied upon a fabric layer outer surface. The pile yarns 21 extend generally between the first fabric layer 13 and the second fabric layer 15 and through the air flow region therebetween. As discussed above, the resilient separation provided by pile yarns 21 enhances circulation of air between the reclining surface of viscoelastic foam and an opposed skin surface of the person reclining upon the cover. The pile yarns are spaced and positioned to resiliently urge apart the two fabric layers, thereby maintaining the air flow region to optimize user comfort. Moreover, the pile yarns 21 are sufficiently spaced from one another to allow circulating air flow through the intermediate region of the fabric 11. This enhanced air flow helps to prevent bed sores, which can occur due to constant body pressure and limited air circulation.

Pile yarn 21 may be knit with between 16 and 28 wales per inch and 14 to 36 courses per inch. This density enhances the ability of the fabric to maintain the spacing of the two layers under pressure. Pile yarn 21 may be made of the same material as the two fabric layers, or may be made of a different material. In order to render the interconnecting pile yarn resilient, the yarn may be made of a resilient material such as monofilament or multifilament polyester, nylon, etc. Pile yarn 21 may have a fineness of between 40 and 600 denier, e.g., between 40 and 300 denier, with an individual fiber fineness of 1 to 12 dpf.

The pile yarn may be made from fibers that have been rendered hydrophilic in order to facilitate the transport of moisture from top layer 13 to layer 15. Stitch yarn 17 of top layer 13 is also preferably made of fibers that have been rendered hydrophilic. This construction facilitates moisture transport away from the body, maintaining a comfortable top layer and air circulation next to the skin. The top layer 13 may be chemically treated or it may be formed of modified fibers that render the fabric layer hydrophilic, as described in U.S. Pat. No. 5,3 1 2,667. The transport of water from the surface is substantially enhanced by the hydrophilic nature of the top layer because liquid moisture is readily transportable along the surface of the yarn fibers of the layer.

Top layer 13 may be formed of stitch yarn having a fineness of between 50 and 600 denier with an individual fiber fineness in the range of between 0.3 and 2.5 dpf, if multifilament. Backing or lay-in yarns 25 and 26 of top layer 13 may be multifilament and may have a fineness of between 70 and 300 denier, with an individual fiber fineness of 0.5 to 5.0 dpf.

The stitch yarns may be formed of synthetic material such as polyester, acrylic or nylon, or in some cases a natural material such as cotton. The yarns may be filament or spun, textured or fully oriented. Preferably, stitch yarns 17 and 19 and backing yarns 25 and 26 are formed of polyester or nylon that has been rendered hydrophilic in order to enhance transport of perspiration or water.

Second fabric layer 15 may be the same as top layer 13 or may have different characteristics. Layer 15 may in some cases consist of hygroscopic fibers in order to absorb and hold a considerable volume of moisture. Particularly, backing yarn 26 of second fabric layer 15 may be formed of moisture absorbent material such as cotton (which absorbs 2 to 3 times its weight of water), rayon, wool or a super absorbent fiber such as a hydrolyzed copolymer of acrylic acid (which absorbs between two and eight times its weight). In accordance with the disclosure, any suitable moisture absorbent material may be used, e.g., natural fibers or synthetics, so long as the yarn or fiber material chosen for layer 15 has relatively greater moisture absorbency than the fiber or yarn of layer 13.

The use of a super absorbent fiber is quite desirable in that the fibers will absorb many times their own weight, even when under pressure, and will retain the absorbed liquid when subjected to pressure. Examples of suitable types of super absorbent fibers are described in U.S. Pat. No. 5,344,698.

If cotton or rayon fibers are used for the second fabric layer, they may be chemically modified after knitting the composite fabric by treatment with alkyl chlorides and cross-linking of the resultant ethers to form carboxymethylated cellulosic fibers, as known to one of skill in the art, in order to render the second layer super absorbent.

The surface of top fabric layer 13 may be sanded, brushed or napped, forming a pile or velour surface. The yarn which is more coarse, i.e. either the stitch yarn or the interconnecting pile yarn, is napped. Generally the yarn napped is a multifilament yarn.

Optionally, as discussed above, the fabric may incorporate elastomeric yarn, such as LYCRA or SPANDEX, in one or both of lay-in yarns 25 and 26 of layers 13 and 15, respectively, and/or the stitch yarns 17, 19. Such yarn will have a total fineness between about 70 and 300 denier. This will enhance softness and flexibility of the layer, and thus its conformability to the viscoelastic foam. The elastomeric yarn may also be added to the stitch yarn of one or both layers.

Top layer 13 may be coated with a breathable barrier layer, i.e., a barrier layer that is impermeable to liquid water but permeable to water vapor. The barrier layer deposited on the fabric layer is preferably a film with good moisture vapor transmission characteristics. Suitable films include polyurethane, polysiloxane and polysulfane.

The barrier layer may be applied to the fabric layer by methods well known in the art. These include transfer coating, in which the barrier layer is first placed or laid on a carrier. Thereafter, the film is placed on the fabric layer, and the carrier is then discarded. Alternative methods for applying the film include direct lamination of an extruded film, as well as direct roller coating of a solution onto the fabric layers from which the solvent is then evaporated. A further method for applying the barrier layer is first applying an adhesive on the fabric layer by spraying or gravure printing and then placing a self-supporting film on top of the adhesive in the manner of lamination.

A portion of the pile yarns 21 interconnecting the two layers may be perpendicular to each of the first and second fabric layers, while the remaining pile yarns 21 are disposed at varying angles between the two layers, with the result that the former will be of lesser and the latter of greater bulk. Such constructions are described in U.S. Patent No. 6,156,406, the complete disclosure of which is incorporated herein by reference.

A number of implementations have been described. Nevertheless, it will be understood that various modifications may be made without departing from the scope of this disclosure within the scope of the following claims.

## Claims

1. A cover (102; 102'; 102"; 102"') for a mattress having a reclining surface of viscoelastic foam, the cover comprising:
a circular knit fabric body having four-way stretch and defining:
a first pile surface (107) disposed for engagement with the reclining surface; an opposite, second pile surface (105) disposed for engagement by a person reclining upon the cover with the first surface disposed in engagement with the reclining surface; and
wherein the second pile surface (105) defines at least one air flow region for enhanced circulation of air between the reclining surface of viscoelastic foam and an opposed skin surface of the person reclining upon the cover; and
wherein said second pile surface (105) defines one or more regions with relatively high pile (110; 103) disposed among one or more regions of relatively low pile or no pile (112; 104), with the one or more regions of relatively low pile or no pile defining the at least one air flow region for enhanced circulation of air between the reclining surface of viscoelastic foam and an opposed skin surface of the person reclining upon the cover.

2. The cover of claim 1, wherein the one or more regions with relatively high pile (110; 103) and the one or more regions of relatively low pile or no pile (112; 104) are arranged upon said second pile surface by
a) engineered body mapping techniques in a manner to position the at least one air flow region for enhanced circulation of air between the reclining surface of viscoelastic foam and an opposed skin surface of the person reclining upon the cover in accordance with requirements of corresponding body regions of the person reclining upon the cover or
b) standard knitting design techniques in a manner to position the at least one air flow region for enhanced circulation of air generally between the reclining surface of viscoelastic foam and an opposed skin surface of the person reclining upon the cover in a regular pattern.

3. The cover of claim 2, wherein contrasting height among regions of relatively high pile (110; 103) and regions of relatively low pile or no pile (112; 104) is established by contrasting height of sinker loops.

4. The cover of claim 3, wherein said circular knit fabric body comprises
a) stitch yarn with spandex, and/or
b) stretch stitch yarn, and/or
c) hydrophilic fibers, and/or
d) material selected from the group consisting of cotton and wool; and/or
e) fibers of synthetic material, preferably wherein the synthetic material is selected from the group consisting of polyester; nylon; acrylic; polyester, nylon or acrylic that has been rendered hydrophilic; and blends thereof.

5. The cover of claim 3, wherein said sinker loops of said second pile surface are
a) in unnapped yarn form, or
b) in napped, velour form, or
c) in cut loop form without pre-napping.

6. The cover of claim 1, wherein the circular knit fabric body has chemical treatment for one or more properties selected from the group consisting of wicking enhancement, stain release, water repellency, stain repellency, antimicrobial properties, and oil repellency, and preferably wherein said fabric body comprises hydrophilic fibers.

7. The cover of claim 1, wherein said fabric body comprises a fabric laminate.

8. The cover of claim 1, wherein said one or more regions of relatively high pile comprises a plurality of spaced-apart pile pillars (103) and said one or more regions of relatively low pile or no pile comprises intersecting channels (104) extending among said pile pillars and defining said at least one air flow region for enhanced circulation of air between the reclining surface of viscoelastic foam and an opposed skin surface of the person reclining upon the cover.

9. The cover of claim 8, wherein said fabric body comprises
a) a double bar raschel warp knit construction, and/or
b) a knit with about 16 to about 28 wales per inch, and/or
c) a knit structure with about 14 courses to about 36 courses per inch,
and/or
d) have fineness in a range of about 40 to about 600 denier, and/or
e) comprise individual fibers having fineness in a range of about 1 dpf to about 12 dpf.

10. The cover of any of claims 1 to 9, wherein the first pile surface (107) defines at least one other air flow region for enhanced circulation of air between the reclining surface of viscoelastic foam and an opposed skin surface of the person reclining upon the cover.

11. The cover of claim 10, wherein said first pile surface (107) defines one or more regions (110; 103) with relatively high pile disposed among one or more regions of relatively low pile or no pile (112; 104), with the one or more regions of relatively low pile or no pile defining the at least one other air flow region.

12. A covered mattress having a cover in accordance with any of the preceding claims.

13. A method of forming a cover for a mattress according to claim 1 having a reclining surface of viscoelastic foam, said method comprising the steps of:
forming a circular knit fabric having four way stretch, with a first pile surface and an opposite, second pile surface and defining at least one air flow region for enhanced circulation of air between the reclining surface of viscoelastic foam and an opposed skin surface of the person reclining upon the cover; and
forming the circular knit fabric into a cover for a mattress having a reclining surface of viscoelastic foam.

## Patentansprüche

1. Bezug (102; 102'; 102 "; 102"') für eine Matratze mit einer Liege-Fläche aus visko-elastischem Schaum, wobei der Bezug umfasst:
eine Rundstrickware bzw. Rundwirkware mit Vierzügigkeit und definierend:
eine erste Flor-Fläche (107), angeordnet zum Eingriff mit der Liege-Fläche; eine entgegengesetzte, zweite Flor-Fläche (105), angeordnet zum Eingriff durch eine Person, die auf dem Bezug mit der ersten Fläche liegt, angeordnet zum Eingriff mit der Liege-Fläche; und
wobei die zweite Flor-Fläche (105) mindestens einen Luftstrom-Bereich zur verstärkten Zirkulation von Luft zwischen der Liege-Fläche aus dem visko-elastischen Schaum und einer entgegengesetzten Haut-Fläche von der auf dem Bezug liegenden Person definiert; und
wobei die zweite Flor-Fläche (105) einen oder mehrere Bereiche mit relativ hohem Flor (110; 103), angeordnet zwischen einem oder mehreren Bereichen mit relativ niedrigem Flor oder keinem Flor (112; 104), definiert, wobei der eine oder die mehreren Bereiche mit relativ niedrigem Flor oder keinem Flor den mindestens einen Luftstrom-Bereich zur verstärkten Zirkulation von Luft zwischen der Liege-Fläche aus dem visko-elastischen Schaum und einer entgegengesetzten Haut-Fläche der auf dem Bezug liegenden Person definiert.

2. Bezug nach Anspruch 1, wobei der eine oder die mehreren Bereiche mit relativ hohem Flor (110; 103) und der eine oder die mehreren Bereiche mit relativ niedrigem Flor oder keinem Flor (112; 104) auf der zweiten Flor-Fläche angeordnet sind durch
a) Engineered-Body-Mapping-Techniken in einer Weise, um den mindestens einen Luftstrom-Bereich zur verstärkten Zirkulation von Luft zwischen der Liege-Fläche aus dem visko-elastischen Schaum und einer entgegengesetzten Haut-Fläche von der auf der Bezug liegenden Person gemäß den Erfordernissen von entsprechenden Körperbereichen von der auf dem Bezug liegenden Person zu positionieren oder
b) Standard-Wirk- bzw. Standard-Strick-Techniken in einer Weise, um den mindestens einen Luftstrom-Bereich zur verstärkten Zirkulation von Luft zwischen der Liege-Fläche aus dem visko-elastischen Schaum und einer entgegengesetzten Haut-Fläche von der auf dem Bezug liegenden Person in einem regelmäßigen Muster zu positionieren.

3. Bezug nach Anspruch 2, wobei die kontrastierende Höhe zwischen Bereichen von relativ hohem Flor (110; 103) und Bereichen von relativ niedrigem Flor oder keinem Flor (112; 104) durch die kontrastierende bzw. abgesetzte Höhe von Platinenmaschen bzw. Faserschlingen eingestellt wird.

4. Bezug nach Anspruch 3, wobei die Rundstrickware bzw. Rundwirkware umfasst
a) Stickgarn mit Spandex und/oder
b) elastisches Stickgarn und/oder
c) hydrophile Fasern und/oder
d) Material, ausgewählt aus der Gruppe, bestehend aus Baumwolle und Wolle; und/oder
e) Fasern aus synthetischem Material, vorzugsweise worin das synthetische Material aus der Gruppe, bestehend aus Polyester; Nylon; Acryl; Polyester, Nylon oder Acryl, das hydrophil gemacht wurde; und Gemischen davon, ausgewählt ist.

5. Bezug nach Anspruch 3, wobei die Platinenmaschen bzw. Faserschlingen von der zweiten Flor-Fläche sind
a) in nicht aufgerichteter Garn-Form oder
b) in aufgerichteter Velour-Form oder
c) in Schnittschlingen-Form ohne Vor-Aufrichten.

6. Bezug nach Anspruch 1, wobei die Rundstrickware bzw. Rundwirkware chemische Behandlung für eine oder mehrere Eigenschaften, ausgewählt aus der Gruppe, bestehend aus Feuchtetransport-Verstärkung, Fleckenbeständigkeit, Wasserabweisung, Fleckenabweisung, antimikrobielle Eigenschaften und/oder Ölabweisung, aufweist und wobei der Textil-Körper vorzugsweise hy···drophile Fasern umfasst.

7. Bezug nach Anspruch 1, wobei der Textil-Körper ein Textil-Laminat umfasst.

8. Bezug nach Anspruch 1, wobei der eine oder die mehreren Bereiche von dem relativ hohen Flor eine Vielzahl von voneinander beabstandeten Flor-Fransen (103) umfasst und wobei der eine oder die mehreren Bereiche mit relativ niedrigem Flor oder keinem Flor sich überkreuzende Kanäle (104) umfasst, die sich unter den Flor-Fransen erstrecken, und den mindestens einen Luftstrom-Bereich zur verstärkten Zirkulation von Luft zwischen der Liege-Fläche aus visko-elastischem Schaum und einer entgegengesetzten Haut-Fläche von der auf dem Bezug liegenden Person definieren.

9. Bezug nach Anspruch 8, wobei der Textil-Körper umfasst
a) einen Doppelbarren-Raschel-Kettenwirk-Aufbau und/oder
b) eine Wirkware mit etwa 16 bis etwa 28 Maschenstäbchen pro Zoll und/oder
c) eine Wirkstruktur mit etwa 14 Maschenreihen bis etwa 36 Maschenreihen pro Zoll und/oder
d) einen Feinheitsgrad in einem Bereich von etwa 40 bis etwa 600 Denier aufweist und/oder
e) einzelne Fasern mit einem Feinheitsgrad in einem Bereich von etwa 1 dpf bis etwa 12 dpf umfasst.

10. Bezug nach einem der Ansprüche 1 bis 9, wobei die erste Flor-Fläche (107) mindestens einen anderen Luftstrom-Bereich zur verstärkten Zirkulation von Luft zwischen der Liege-Fläche aus visko-elastischem Schaum und einer entgegengesetzten Haut-Fläche von der auf dem Bezug liegenden Person definiert.

11. Bezug nach Anspruch 10, wobei die erste Flor-Fläche (107) einen oder mehrere Bereiche (110; 103) mit relativ hohem Flor, angeordnet zwischen einem oder mehreren Bereichen mit relativ niedrigem Flor oder keinem Flor (112; 104), definiert, wobei der eine oder die mehreren Bereiche mit relativ niedrigem Flor oder keinem Flor mindestens einen anderen Luftstrom-Bereich definieren.

12. Bezogene Matratze mit einem Bezug nach einem der vorangehenden Ansprüche.

13. Verfahren zum Herstellen eines Bezugs für eine Matratze nach Anspruch 1 mit einer Liege-Fläche aus visko-elastischem Schaum, wobei das Verfahren die Schritte umfasst von:
Bilden von einer Rundstrickware bzw. Rundwirkware mit Vierzügigkeit mit einer ersten Flor-Fläche und einer entgegengesetzten, zweiten Flor-Fläche und Definieren von mindestens einem Luftstrom-Bereich zur verstärkten Zirkulation von Luft zwischen der Liege-Fläche aus visko-elastischem Schaum und einer entgegengesetzten Haut-Fläche von der auf dem Bezug liegenden Person; und
Formen von der Rundstrickware bzw. Rundwirkware zu einem Bezug für eine Matratze mit einer Liege-Fläche aus visko-elastischem Schaum.

## Revendications

1. Housse (102 ; 102' ; 102" ; 102"') pour un matelas comportant une surface de couchage en mousse viscoélastique, la housse comprenant :
un corps de tissu tricoté circulaire comportant une élasticité dans quatre directions et définissant :
une première surface de velours (107) disposée pour entrer en contact avec la surface de couchage ;
une seconde surface de velours opposée (105) disposée pour entrer en contact avec une personne allongée sur la housse avec la première surface disposée sur la surface de couchage ; et
dans laquelle la seconde surface de velours (105) définit au moins une région d'écoulement d'air pour une circulation améliorée d'air entre la surface de couchage en mousse viscoélastique et une surface cutanée, opposée, pour la personne allongée sur la housse ; et
dans laquelle ladite seconde surface de velours (105) définit une ou plusieurs régions avec un velours relativement haut (110 ; 103), disposées parmi une ou plusieurs régions de velours relativement bas, voire sans aucun velours, (112 ; 104), la ou les régions de velours relativement bas, voire sans aucun velours, définissant l'au moins une région d'écoulement d'air pour une circulation améliorée d'air entre la surface de couchage en mousse viscoélastique et une surface cutanée opposée pour la personne allongée sur la housse.

2. Housse selon la revendication 1, dans laquelle la ou les régions avec velours relativement haut (110 ; 103) et la ou les régions de velours relativement bas, voire sans aucun velours, (112 ; 104) sont agencées sur ladite seconde surface de velours par l'intermédiaire de :
a) techniques scientifiques de cartographie corporelle de manière à positionner l'au moins une région d'écoulement d'air pour une circulation améliorée d'air entre la surface de couchage en mousse viscoélastique et une surface cutanée opposée pour la personne allongée sur la housse conformément à des nécessités de régions corporelles correspondantes de la personne allongée sur la housse, ou
b) techniques standard de conception de tricot de manière à positionner l'au moins une région d'écoulement d'air pour une circulation améliorée d'air généralement entre la surface de couchage en mousse viscoélastique et une surface cutanée opposée de la personne allongée sur la housse selon une armure régulière.

3. Housse selon la revendication 2, dans laquelle un contraste de hauteur parmi des régions de velours relativement haut (110 ; 103) et des régions de velours relativement bas, voire sans aucun velours, (112 ; 104) est établi en réalisant un contraste de hauteur de boucles de platine (boucles faites sur une platine).

4. Housse selon la revendication 3, dans laquelle ledit corps de tissu tricoté circulaire comprend :
a) un fil de maille avec de l'élasthanne, et/ou
b) un fil de maille extensible, et/ou
c) des fibres hydrophiles, et/ou
d) un matériau sélectionné parmi le groupe constitué de coton et de laine ; et/ou
e) des fibres de matériau synthétique, de préférence dans laquelle le matériau synthétique est sélectionné parmi le groupe constitué de polyester ; nylon ; acrylique ; de polyester, nylon ou acrylique qui a été rendu hydrophile ; et des mélanges de ceux-ci.

5. Housse selon la revendication 3, dans laquelle lesdites boucles de platine de ladite seconde surface de velours sont :
a) sous forme de fil non duveté, ou
b) sous forme de velours duveté, ou
c) sous forme de boucle coupée sans duvetage préalable.

6. Housse selon la revendication 1, dans laquelle le corps de tissu tricoté circulaire possède un traitement chimique pour une ou plusieurs propriétés sélectionnées parmi le groupe constitué d'amélioration de pénétration capillaire, d'aptitude au détachage, d'hydrofugation, d'aptitude antitache, de propriétés antimicrobiennes, et d'oléofugation, et de préférence dans laquelle ledit corps de tissu comprend des fibres hydrophiles.

7. Housse selon la revendication 1, dans laquelle ledit corps de tissu comprend un stratifié de tissu.

8. Housse selon la revendication 1, dans laquelle ladite ou lesdites régions de velours relativement haut comprennent une pluralité de colonnes de velours espacées (103) et ladite ou lesdites régions de velours relativement bas, voire sans aucun velours, comprennent des canaux croisés (104) s'étendant parmi lesdites colonnes de velours et définissant ladite au moins une région d'écoulement d'air pour une circulation améliorée d'air entre la surface de couchage en mousse viscoélastique et une surface cutanée opposée pour la personne allongée sur la housse.

9. Housse selon la revendication 8, dans laquelle ledit corps de tissu comprend :
a) une construction tricotée en chaîne Rachel à double barre, et/ou
b) un tricot avec environ 16 à environ 28 colonnes par pouce, et/ou
c) une structure tricotée avec environ 14 rangées de mailles à environ 36 rangées de mailles par pouce, et/ou
d) une finesse au sein d'une plage d'environ 40 à environ 600 deniers, et/ou
e) des fibres individuelles possédant une finesse au sein d'une plage d'environ 1 dpf à environ 12 dpf.

10. Housse selon une quelconque des revendications 1 à 9, dans laquelle la première surface de velours (107) définit au moins une autre région d'écoulement d'air pour une circulation améliorée d'air entre la surface de couchage en mousse viscoélastique et une surface cutanée opposée de la personne allongée sur la housse.

11. Housse selon la revendication 10, dans laquelle ladite première surface de velours (107) définit une ou plusieurs régions (110 ; 103) avec un velours relativement haut disposées parmi une ou plusieurs régions de velours relativement bas, voire sans aucun velours, (112 ; 104), la ou les régions de velours relativement bas, voire sans aucun velours, définissant l'au moins une autre région d'écoulement d'air.

12. Matelas recouvert d'une housse comportant une housse selon une quelconque des revendications précédentes.

13. Procédé de fabrication d'une housse pour un matelas selon la revendication 1 comportant une surface de couchage en mousse viscoélastique, ledit procédé comprenant les étapes consistant à :
former un tissu tricoté circulaire comportant une élasticité dans quatre directions, avec une première surface de velours et une seconde surface de velours opposée et définissant au moins une région d'écoulement d'air pour une circulation améliorée d'air entre la surface de couchage en mousse viscoélastique et une surface cutanée opposée pour la personne allongée sur la housse ; et
former le tissu tricoté circulaire en une housse pour un matelas comportant une surface de couchage en mousse viscoélastique.
